# EUROPÄISCHE PATENTSCHRIFT

(11) **EP 0 799 638 B1**
(45) Veröffentlichungstag und Bekanntmachung des Hinweises auf die Patenterteilung: **26.09.2001**
(21) Anmeldenummer: 97104738.6
(22) Anmeldetag: 20.03.1997
(51) Int. Cl.: B01J 8/44

(54) **Einteiliger Anströmboden für eine Wirbelschicht mit Durchtrittsöffnungen für das von unten nach oben strömende Gas**
Fluidized bed gase distributor with apertures for upflow gas
Grille monobloc pour la répartition de gaz dans un lit fluidisé présentant des ouvertures pour le flux ascendant de gaz

(30) Priorität: 06.04.1996 DE 19613906
(43) Veröffentlichungstag der Anmeldung: 08.10.1997
(73) Patentinhaber: Sachtleben Chemie GmbH, 47198 Duisburg (DE)
(72) Erfinder: Fach, Roland, 46514 Schermbeck (DE); Piechaczek, Fred, 47443 Moers (DE)
(74) Vertreter: Uppena, Franz, Dr.

(56) Entgegenhaltungen:
- US-A- 2 711 308
- US-A- 3 999 951
- US-A- 4 286 393
- US-A- 4 971 141

## Beschreibung

Die Erfindung bezieht sich auf einen Anströmboden aus Metallguss für Wirbelschichtreaktoren mit mehreren für den Durchtritt des von unten nach oben strömenden Gases vorgesehenen, sich von der Unterseite zur Oberseite des Anströmbodens verengenden Durchbrechungen, die mit den Längsachsen in Richtung mehrerer parallel zueinander verlaufenden senkrecht auf dem Anströmboden stehenden Ebenen hintereinander angeordnet sind.

Anströmböden für Wirbelschichten sind bekannt. In Werner Hemming, Verfahrenstechnik, 3. Auflage, 1984, S. 125, Vogel-Buchverlag Würzburg wird ein Anströmboden beschrieben, der als poröse Platte oder Lochplatte gestaltet ist. In der Regel werden diese bekannten Anströmböden aus Stahl gefertigt, der besonders bei Betriebsende, wenn die Schüttung schlagartig auf den Anströmboden fällt, hohen Temperaturen ausgesetzt ist, was zu einem nachteiligen Verziehen des Anströmbodens führt. Die bekannten Anströmböden haben ferner den Nachteil, daß die Durchtrittsöffnungen für das von unten nach oben strömende Gas relativ schnell durch Schüttung verstopft werden, was die Ausbildung der Wirbelschicht nachteilig beeinflußt. In der US-A-2711308 ist eine Kontaktsäule mit einem Gitterboden, bestehend aus mehreren nebeneinander angeordneten Profilstangen, mit zwischen diesen vorhandenen Durchgangsöffnungen für flüssige Materialien beschrieben, die u.a. aus feinteiligen im Gas suspendierbaren Feststoffpartikel, wie Sand, bestehen können. Die US-A-4286393 befasst sich mit einem Anströmboden für Wirbelbetten, der aus mehreren nebeneinander gelegten Bauteilen mit dazwischen befindlichen Durchtrittsöffnungen für das Wirbelgas aufgebaut ist.

Der Erfindung liegt daher die Aufgabe zugrunde, einen einteiligen Anströmboden für eine Wirbelschicht mit Durchtrittsöffnungen für das von unten nach oben strömende Gas zu schaffen, der weitgehend temperaturbeständig ist und die Ausbildung einer Wirbelschicht über relativ lange Betriebszeiten ermöglicht.

Die der Erfindung zugrundeliegende Aufgabe wird durch einen einteiligen aus hitzebeständigem Stahlguss bestehenden Anströmboden gelöst, dessen Durchbrechungen jeweils aus einer von der Unterseite her angebrachten keilrillenförmigen Längsnut und wenigstens einem vom Längsnutgrund sich zur Oberseite erstreckenden 2 bis 6 mm hohen schlitzförmiges Langloch mit rechteckigem Querschnitt bestehen, wobei der seitliche Abstand zwischen den Längsseiten von zwei benachbarten Längsnuten an der Unterseite 8 bis 15 mm beträgt. Der einteilige Anströmboden ist dabei in vorteilhafter Weise als Rostsegment gestaltet. Im Reaktor sind dann mehrere einteilige Anströmböden nebeneinander abgeordnet und trennen die Schüttung und den Strömungserzeuger voneinander. Unter der Bezeichnung "Wirbelschicht" ist die Wirbelschicht mit genau definierter Oberfläche, mäßiger Bettbewegung und geringem Feststoffaustrag mit dem Gas; die stark expandierte Wirbelschicht mit starker Feststoffbewegung und Feststoffaustritt am Gasaustritt des Reaktors sowie die zirkulierende Wirbelschicht mit starker Feststoffbewegung, vollständigem Feststoffaustrag am Gasaustritt unter teilweiser Rückführung des Feststoffes zu verstehen. Unter der Bezeichnung "hitzebeständiger Stahlguß" sind diejenigen Gussarten zu verstehen, die in der DIN 17465 beschrieben sind. Der jeweils obere Teil der Durchbrechungen grenzt an die Auflagefläche des Festbetts, über welchem sich die Wirbelschicht ausbildet. Der untere Teil kann mit mehreren oberen Teilen, die in der Regel nebeneinander angeordnet sind, verbunden sein. Der untere Teil der Durchbrechungen grenzt an die Anströmseite des von unten nach oben strömenden Gases. Die Schenkel der keilrillenförmigen Längsnut sind beispielsweise im Winkel von 3° zur senkrechten geneigt, dass dieser einteilige Anströmboden eine hohe Temperaturbeständigkeit aufweist, und sich auch in der Abschaltphase nicht verzieht. Durch die erfindungsgemäße Gestaltung der Durchbrechungen wird ein Zusetzen derselben verhindert und eine kontinuierliche Ausbildung der Wirbelschicht über relativ lange Betriebszeiten ermöglicht. In vorteilhafter Weise werden die Durchbrechungen länglich ausgestaltet, wobei der obere Teil die Form einer Wanne aufweist und der untere Teil schlitzförmig ausgebildet ist.

Aufgrund der Höhe des schlitzförmigen Langloch-Abschnitts der Durchbrechungen von 2 bis 6 mm lassen sich die schlitzförmigen Langlöcher auf relativ einfache Weise nach dem Gussvorgang mit Hilfe eines Lasers anbringen. Dies vereinfacht die Herstellung des einteiligen Anströmbodens, da auf aufwendig konstruierte Gussformen verzichtet werden kann.

Der seitliche Abstand zwischen den Längsseiten der Längsnuten von 8 bis 15 mm erleichtert in vorteilhafter Weise die Ausbildung einer Wirbelschicht über dem Anströmboden.

Eine weitere bevorzugte Ausgestaltung der Erfindung besteht darin, dass der Anströmboden rechteckig ausgebildet ist und an jeweils zwei gegenüberliegenden Kanten jeweils einen oberen Anschlag mit Auflagefläche A auf. Mit Hilfe des Anschlags kann der einteilige Anströmboden auf relativ einfache Weise im Wirbelschichtreaktor fixiert werden. Dazu ist es lediglich erforderlich, den einteiligen Anströmboden mit seiner Auflagefläche A gegen ein Stützgerüst anzulegen. Ferner ist es in vorteilhafter Weise möglich, einteilige Anströmböden relativ schnell ein- und auszubauen, so daß eine Umrüstung des Reaktors relativ problemlos erfolgen kann.

Gemäß einer weiteren bevorzugten Ausgestaltung der Erfindung sind an der einen anderen weiteren Kante ein oberer Anschlag und an der dieser Kante gegenüberliegenden Kante ein weiterer unterer Anschlag angeordnet, die jeweils mindestens eine Nut aufweisen. Dies ermöglicht in vorteilhafter Weise die Fixierung des einteiligen Anströmbodens mit benachbarten Anströmböden oder mit Stützvorrichtungen. Dabei ist besonders vorteilhaft, daß auf zusätzliche Verbindungselemente wie Schrauben oder Nieten verzichtet werden kann.

Eine weitere Ausgestaltung der Erfindung besteht darin, daß der obere Anschlag und der weitere untere Anschlag komplementär zueinander ausgestaltet sind. Dies ermöglicht in vorteilhafter Weise die Anordnung mehrerer, konstruktiv gleichgestalteter einteiliger Anströmböden nebeneinander, die auf einfache und schnelle Weise mit einer Klemmverbindung miteinander verbunden werden, wobei auf zusätzliche Befestigungselemente wie Schrauben oder Nieten verzichtet werden kann. Ferner ist es möglich, auf relativ einfache Weise weitere Anströmböden einzubauen oder überflüssige Anströmböden auszubauen, was die Einsatzmöglichkeiten des Wirbelschichtreaktors erhöht.

Gemäß einer weiteren Ausgestaltung der Erfindung weisen die Nuten des oberen Anschlags und die Nuten des weiteren unteren Anschlags eine unterschiedliche Länge auf. Dies führt in vorteilhafter Weise zu einer weitgehend homogenen Spannungsverteilung in den einteiligen Anströmböden, die miteinander über eine Klemmverbindung verbunden sind.

Nach einer weiteren bevorzugten Ausgestaltung der Erfindung wird als hitzebeständiger Stahlguß ein G-X 40 CrSi 17 eingesetzt. Bei der erfindungsgemäßen Ausgestaltung der Durchtrittsöffnungen wird eine besonders hohe Temperaturbeständigkeit erzielt, wenn der einteilige Anströmboden aus diesem hitzebeständigen Stahlguß hergestellt wird.

Die Erfindung wird nachfolgend anhand der Zeichnung näher und beispielhaft erläutert.

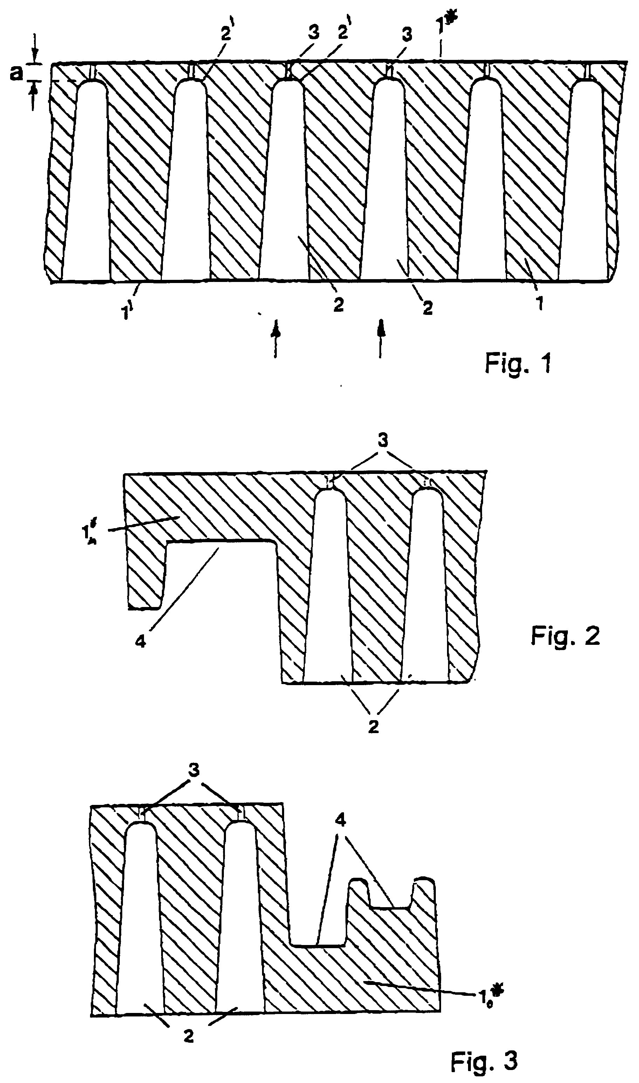

- Fig. 1: zeigt den einteiligen Anströmboden im Querschnitt.
- Fig. 2: zeigt den einteiligen Anströmboden im Querschnitt mit dem oberen Anschlag.
- Fig. 3: zeigt den einteiligen Anströmboden im Querschnitt mit dem weiteren unteren Anschlag.
- Fig. 4: zeigt eine Klemmverbindung zweier benachbarter einteiliger Anströmböden.
- Fig. 5: zeigt den einteiligen Anströmboden im Längsschnitt mit dem unteren Anschlag.
- Fig. 6: zeigt die Draufsicht auf den einteiligen Anströmboden mit Quer- und Längsschnitt.
- Fig. 7: zeigt eine weitere Draufsicht auf den einteiligen Anströmboden mit Längs- und Querschnitt.
- Fig. 8: zeigt die vereinfachte Anordnung mehrerer einteiliger Anströmböden in einem Wirbelschichtreaktor.

Der einteilige Anströmboden (1) weist Durchbrechungen auf, die aus einem oberen schlitzförmigen Langloch-Abschnitt (3) und einem unteren keilrillenförmigen Längsnut (2) bestehen. Das Gas strömt in Pfeilrichtung von unten nach oben durch den einteiligen Anströmboden, wobei es an der dem Gas zugewandten Seite (1') des einteiligen Anströmbodens (1) in den unteren Teil (2) in Pfeilrichtung eintritt, anschließend durch den oberen Teil (3) strömt und an der der Wirbelschicht zugewandten Seite (1") des einteiligen Anströmbodens (1) aus dem Anströmboden (1) austritt. Der keilrillenförmige Längsnut (2) ist in der Richtung des strömenden Gases durch einen abgerundeten Nutgrund (2') begrenzt. Der schlitzförmige Langloch-Abschnitt (3) weist im Querschnitt eine rechteckige Begrenzung und eine Höhe a von 2 bis 6 mm auf. Der Neigungswinkel der Schenkel, der keilrillenförmigen Längsnut (2) beträgt zur Senkrechten in vorteilhafter Weise 3°.

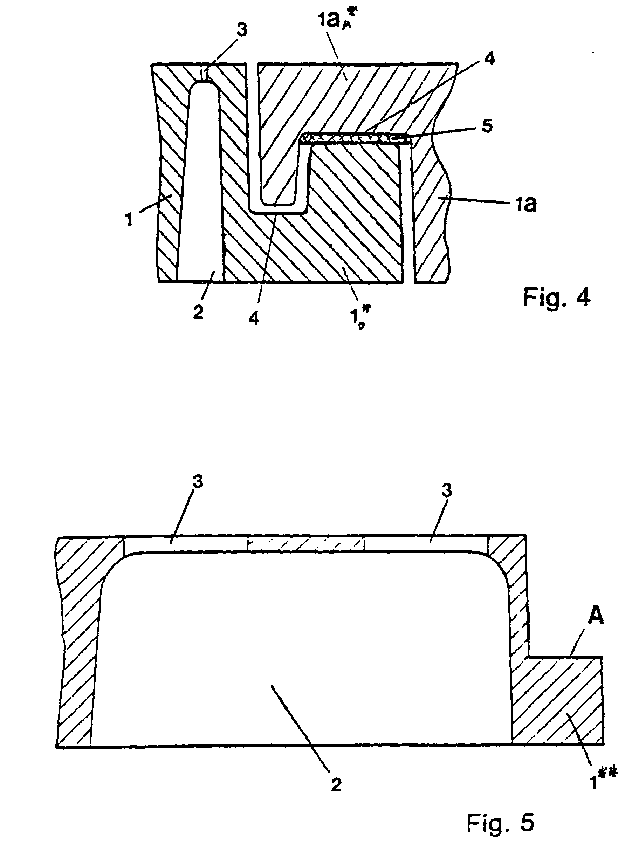

In Fig. 2 ist der einteilige Anströmboden im Querschnitt mit dem oberen Anschlag (1ᵤ*) dargestellt. Der obere Anschlag (1ᵤ*) weist eine Nut (4) auf.

In Fig. 3 ist der einteilige Anströmboden (1) im Querschnitt mit einem weiteren unteren Anschlag (1ₒ*) dargestellt. Der weitere untere Anschlag (1ₒ*) weist zwei Nuten (4) auf.

In Fig. 4 ist die Klemmverbindung zwischen zwei benachbarten einteiligen Anströmböden (1,1a) dargestellt. Der weitere untere Anschlag (1ₒ*) des einteiligen Anströmbodens (1) und der obere Anschlag (1aᵤ*) des benachbarten Anströmbodens (1a) sind komplementär zueinander ausgestaltet, so daß ein Ineinandergreifen des oberen Anschlags (1aᵤ*) mit dem unteren Anschlag (1ₒ*) erfolgen kann. Zur Abdichtung wird in die Nut (4) des oberen Anschlags (1aᵤ*) eine Dichtung (5) aus keramischem Werkstoff eingebracht. Die Klemmverbindung kann auf diese Weise relativ einfach und problemlos erfolgen, so daß auch kurzfristig weitere einteilige Anströmböden (1,1a) eingebaut oder ausgebaut werden können.

In Fig. 5 ist der einteilige Anströmboden im Längsschnitt mit dem unteren Anschlag (1*) dargestellt. Der untere Anschlag (1**) weist eine Auflagefläche A auf, mit welcher der Anströmboden an einem Stützgerüst fixiert werden kann. Die dargestellte Durchbrechnung weist eine untere keilrillenförmige Längsnut (2) und zwei obere schlitzförmige Langloch-Abschnitte (3) auf. Es ist jedoch auch möglich, die oberen schlitzförmigen Langloch-Abschnitte (3) durch Materialeinsparung miteinander zu verbinden.

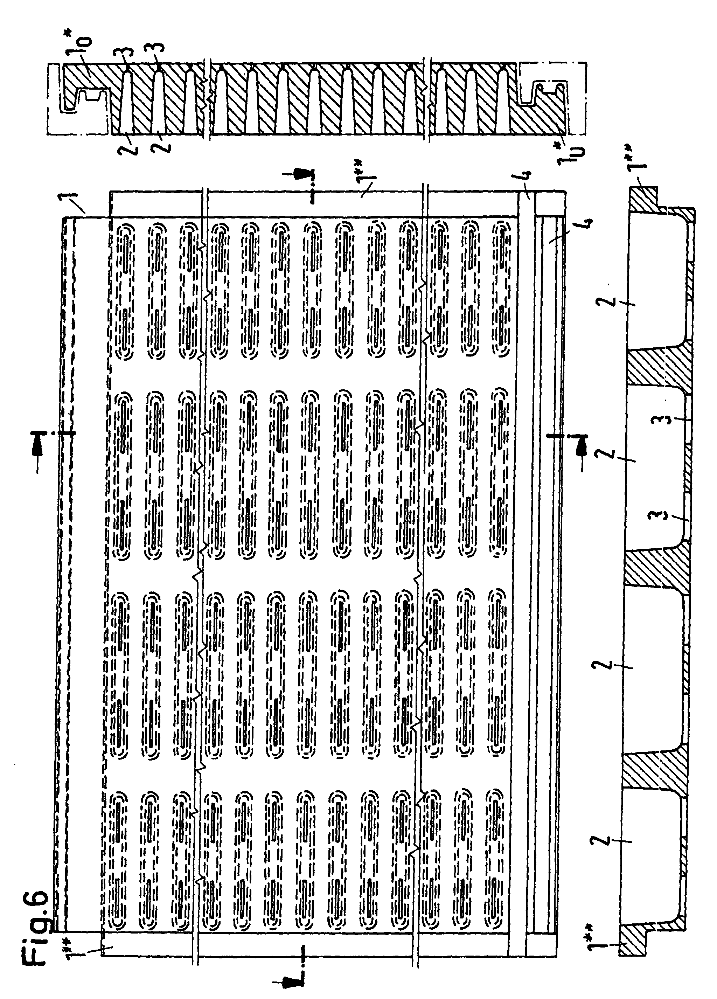

In Fig. 6 ist die Draufsicht auf den einteiligen Anströmboden (1) mit zugehörigem Quer- und Längsschnitt dargestellt. Bei dieser Ausgestaltung des einteiligen Anströmbodens (1) sind die Durchbrechungen nebeneinander parallel zu ihren Längsseiten angeordnet. Die parallel zueinander angeordneten Durchbrechungen sind ferner spaltenförmig in 4 Reihen angeordnet. Im Querschnitt ist schematisch und vereinfacht die Anordnung von benachbarten einteiligen Anströmböden dargestellt.

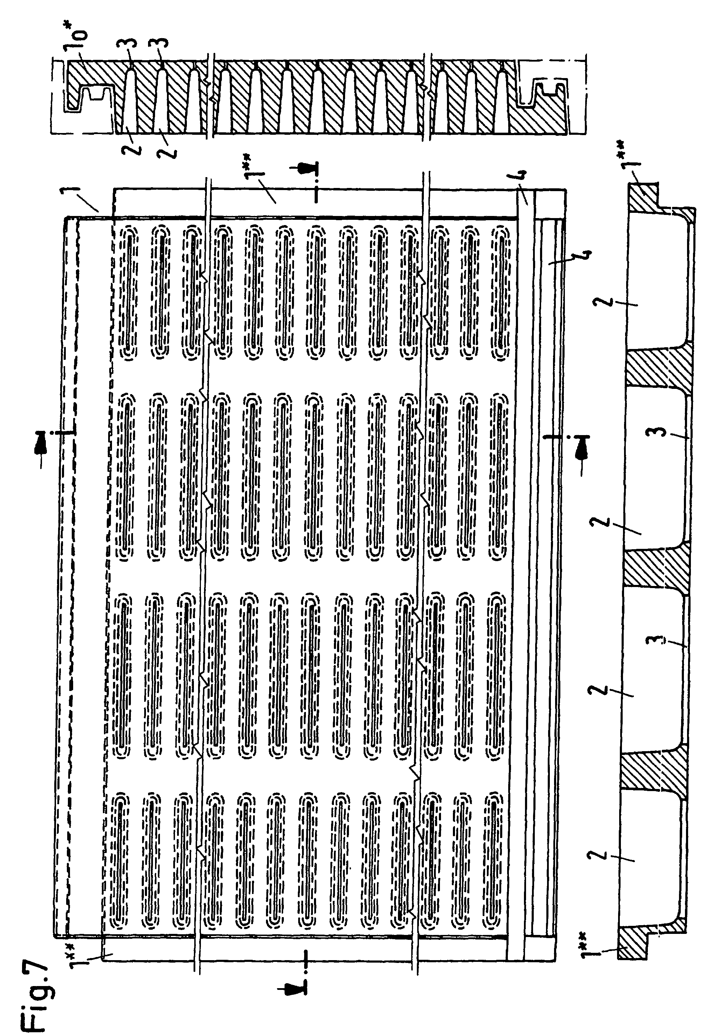

In Fig. 7 ist eine weitere Draufsicht auf den einteiligen Anströmboden (1) zusammen mit dem Quer- und Längsschnitt dargestellt. Im Gegensatz zu der in Fig. 6 dargestellten konstruktiven Ausgestaltung des einteiligen Anströmbodens (1) weisen die Durchbrechungen in Fig. 7 jeweils einen einzigen oberen Teil (3) auf.

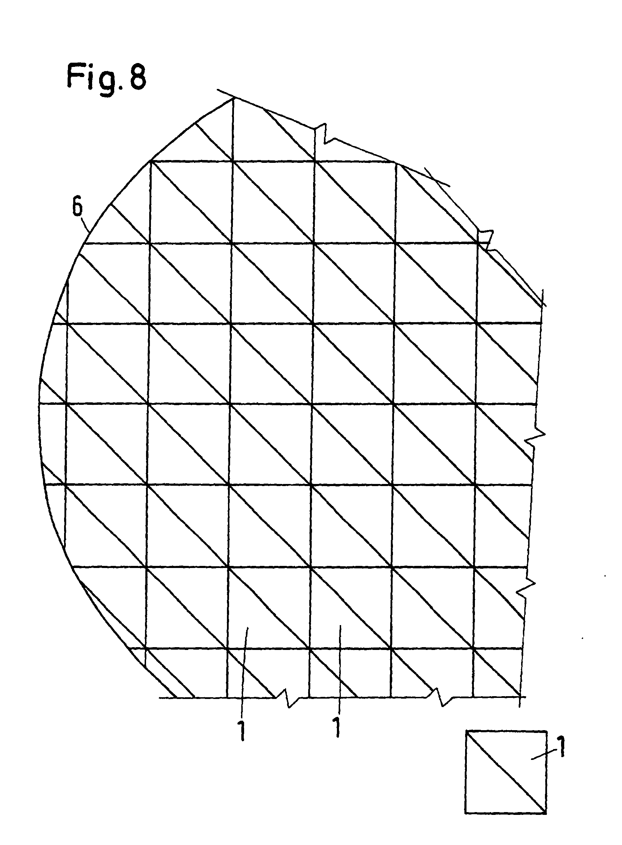

In Fig. 8 ist die Anordnung mehrerer einteiliger Anströmböden (1) in einem Wirbelschichtreaktor (6) stark vereinfacht und schematisch dargestellt. Der Einfachheit halber ist der einteilige Anströmboden (1) in Form eines Quadrat-Symbols dargestellt. Wie der Fig. 8 zu entnehmen ist, ist es an den Randzonen des Wirbelschichtreaktors (6) erforderlich, die einteiligen Anströmböden (1) an den Radius des Wirbelschichtreaktors (6) anzupassen. Durch die oberen Anschläge, die weiteren oberen Anschläge und die unteren Anschläge ist eine Fixierung der einteiligen Anströmböden am Rande des Wirbelschichtreaktors (6) auf relativ einfache Weise möglich.

## Patentansprüche

1. Anströmboden (1) aus Metallguß für Wirbelschichtreaktoren mit mehreren für den Durchtritt des von unten nach oben strömenden Gases vorgesehenen, sich von der Unterseite zur Oberseite des Anströmboden hin verengenden Durchbrechungen, die mit ihren Längsachsen in Richtung mehrerer parallel zueinander verlaufenden senkrecht auf dem Anströmboden stehenden Ebenen hintereinander angeordnet sind, **dadurch gekennzeichnet, dass** der aus hitzebeständigem Stahlguß bestehende Anströmboden einteilig ist, die Durchbrechungen jeweils aus einer von der Unterseite des Anströmbodens her angebrachten keilrillenförmigen Längsnut (2) und wenigstens einem vom Längsnutgrund sich zur Oberseite erstreckenden 2 bis 6 mm hohen schlitzförmigen Langloch (3) mit rechteckigem Querschnitt bestehen und der seitliche Abstand zwischen den Längsseiten zweier benachbarter Längsnuten an der Unterseite des Anströmboden 8 bis 15 mm beträgt.

2. Anströmboden (1) nach Anspruch 1, **dadurch gekennzeichnet, dass** der Anströmboden (1) rechteckig ausgebildet ist und an jeweils zwei gegenüberliegenden Kanten jeweils einen oberen Anschlag (1**) mit Auflagefläche A aufweist.

3. Anströmboden (1) nach Anspruch 2, **dadurch gekennzeichnet, daß** an der einen anderen weiteren Kante ein unterer Anschlag (1ᵤ*,1aᵤ*) und an der dieser Kante gegenüberliegenden Kante ein weiterer oberer Anschlag (1ₒ*) angeordnet sind, die jeweils mindestens eine Nut (4) aufweisen.

4. Anströmboden (1) nach Anspruch 3, **dadurch gekennzeichnet, daß** der untere Anschlag (1ᵤ* ,1aᵤ*) und der weitere obere Anschlag (1ₒ*) komplementär zueinander ausgestaltet sind.

5. Anströmboden (1) nach Anspruch 3 oder Anspruch 4, **dadurch gekennzeichnet, daß** die Nuten (4) des unteren Anschlags und die Nuten (4) des weiteren oberen Anschlags (1ₒ*) eine unterschiedliche Länge aufweisen.

6. Anströmboden (1) nach einem der Ansprüche 1 bis 5, **dadurch gekennzeichnet, daß** als hitzebeständiger Stahlguß ein G-X 40 CrSi 17 eingesetzt wird.

## Claims

1. Cast metal distributor base plate (1) for fluidised bed reactors, the base plate having a plurality of perforations provided for the passage of the gas flowing upwardly from beneath which narrow from the underside to the top of the distributor base plate, which perforations are arranged one behind another with their longitudinal axes aligned with several planes which are parallel to one another and positioned perpendicularly to the distributor base plate, **characterised in that** the distributor base plate, which consists of heat-resistant cast steel, is in a single piece, the perforations each consist of a wedge-shaped longitudinal groove (2) applied from the underside of the distributor base plate and at least one slit-shaped elongate hole (3) of rectangular cross-section and 2 to 6 mm in height extending from the bottom of the longitudinal groove to the top and with the lateral distance between the longitudinal sides of two adjacent longitudinal grooves on the underside of the distributor base plate being 8 to 15 mm.

2. Distributor base plate (1) according to claim 1, **characterised in that** the distributor base plate (1) is rectangular and has on-each of two opposing edges, in each case, an upper limit stop (1**) with a bearing surface A.

3. Distributor base plate (1) according to claim 2, **characterised in that** on the one other further edge there is arranged a lower limit stop (1ᵤ*, 1aᵤ*) and, on the opposing edge to this edge, is arranged a further upper limit stop (1ₒ*), each of which edges has at least one groove (4).

4. Distributor base plate (1) according to claim 3, **characterised in that** the shapes of the lower limit stop (1ᵤ*, 1aᵤ*) and the wider upper limit stop (1ₒ*) are mutually complementary.

5. Distributor base plate (1) according to claim 3 or claim 4, **characterised in that** the grooves (4) of the lower limit stop and the grooves (4) of the wider upper limit stop (1ₒ*) have a different length.

6. Distributor base plate (1) according to one of claims 1 to 5, **characterised in that** G-X 40 CrSi 17 is used as the heat-resistant cast steel.

## Revendications

1. Grille de soufflage (1) en métal moulé pour des réacteurs à lit fluidisé, comportant plusieurs ouvertures pour le passage du gaz circulant de bas en haut, qui se rétrécissent de la face inférieure en direction de la face supérieure de la grille et sont disposées les unes à la suite des autres avec leurs grands axe orientés dans la direction de plusieurs plans mutuellement parallèles, perpendiculaires à la grille de soufflage, **caractérisée en ce que** la grille de soufflage est réalisée d'une pièce en acier moulé réfractaire, en ce que les passages se composent chaque fois d'une rainure longitudinale (2) en forme de sillon trapézoïdal, aménagée à partir de la face inférieure de la grille de soufflage et d'au moins un trou oblong (3) en forme de fente qui s'étend à partir du fond de la rainure longitudinale en direction de la face supérieure, avec une hauteur comprise dans une plage allant de 2 à 6 mm et une section rectangulaire, et en ce que la distance latérale entre les côtés longitudinaux de deux rainures longitudinales contigües, au niveau de la face inférieure de la grille de soufflage, est comprise entre 8 et 15 mm.

2. Grille de soufflage (1) selon la revendication 1, **caractérisée en ce que** la grille de soufflage (1) est rectangulaire et comporte sur deux bords en vis-à-vis une butée (1**) supérieure avec une surface d'appui A.

3. Grille de soufflage (1) selon la revendication 2, **caractérisée en ce qu'**il est prévu sur l'un des autres bords, une butée (1ᵤ*, 1aᵤ*) inférieure et sur le bord en vis-à-vis de celui-ci, une butée (1ₒ*) supérieure, lesquelles butées comportent chacune au moins une rainure (4).

4. Grille de soufflage (1) selon la revendication 3, **caractérisée en ce que** la butée (1ᵤ*, 1aᵤ*) inférieure et la butée (1ₒ*) supérieure supplémentaire sont mutuellement complémentaires.

5. Grille de soufflage (1) selon la revendication 3 ou la revendication 4, **caractérisée en ce que** les rainures (4) de la butée inférieure et les rainures (4) de la butée (1ₒ*) supérieure supplémentaire ont des longueurs différentes.

6. Grille de soufflage (1) selon une des revendications 1 à 5, **caractérisée en ce qu'**on utilise comme acier moulé résistant à la température une nuance G-X 40 CrSi 17.
